# EUROPÄISCHE PATENTSCHRIFT

(11) **EP 0 655 585 B1**
(45) Veröffentlichungstag und Bekanntmachung des Hinweises auf die Patenterteilung: **30.09.1998**
(21) Anmeldenummer: 94118695.9
(22) Anmeldetag: 28.11.1994
(51) Int. Cl.: F24D 3/16

(54) **Heizelement**
Heating element
Elément de chauffage

(30) Priorität: 29.11.1993 DE 4340521
(43) Veröffentlichungstag der Anmeldung: 31.05.1995
(73) Patentinhaber: Breidenbach, Kunibert, D-51688 Wipperfürth-Wipperfeld (DE)
(72) Erfinder: Breidenbach, Kunibert, D-51688 Wipperfürth-Wipperfeld (DE)
(74) Vertreter: Nau, Walter, Dipl.-Ing.

(56) Entgegenhaltungen:
- EP-A- 0 261 985
- EP-A- 0 533 072
- DE-A- 3 312 885
- DE-U- 8 905 365
- FR-A- 2 430 569

## Beschreibung

Die Erfindung betrifft ein Heizelement mit einer eine von einem Heizflüssigkeit durchströmten Heizleitung aufnehmenden Ummantelung, die aus einem leitenden, nicht metallischen und Spannungen aufnehmenden Werkstoff hergestellt ist, in den die Heizleitung ganzflächig einbettbar ist. Weiter betrifft die Erfindung Verwendungsmöglichkeiten eines derartigen Heizelementes.

Ein derartiges Heizelement ist aus der EP-A 0 533 072 bekannt. Das in dieser Druckschrift beschriebene Heizelement betrifft einen Flachheizkörper und ein Verfahren zu dessen Herstellung, bei dem im Inneren des monolitischen Flachheizkörpers flexible elektrische Heizleiter angeordnet sind, wobei der Flachheizkörper als beliebiger Körper aus Kunststein geformt ist. Dabei wird der elektrische Heizleiter auf einem Gitterrahmen aufgespannt und dieser Gitterrahmen aus Polymerbeton wird anschließend in einer Form mit der gleichen Kunststeinmasse aus Polymerbeton vollständig umgossen. Dabei ist Polymerbeton ein Beton, der als Bindemittel statt Zement Reaktionsharze (z.B. ungesättigte Polyester-Epoxidharze, Methylmethacrylatharze) enthält. Polymerbeton zeichnet sich durch außerordentliche Festigkeit, geringe Wasseraufnahme und hohe Chemikalienbeständigkeit (z.B. gegenüber Streusalz) aus.

Das in der weiterhin bekannten DE-A 41 32 870 beschriebene Heizelement ist als Wandheizkörper ausgebildet, wobei dieser Wandheizkörper zwei rechteckige, ebene und gleich große Verschlußplatten aufweist, die beidseits an einem viereckigen Rahmen befestigt ist. In diesem Rahmen verläuft eine Heizleitung, die mit einer der beiden Verschlußplatten unter Einfügung einer Aluminiumplatte wärmeleitend verbunden ist. Zu der gegenüberliegenden Verschlußplatte ist die Heizleitung isoliert. Dieser Wandheizkörper ist aus vielen Bauteilen zusammengesetzt und bedarf einer aufwendigen Handmontage. Darüberhinaus ist die Wärmeleistung dieses Wandheizkörpers unbefriedigend, da die Heizleitung nur mit einem kleinen Teil ihrer Oberfläche wärmeleitend mit einer Verschlußplatte des Wandheizkörpers verbunden ist.

Der Erfindung liegt die Aufgabe zugrunde, ein Heizelement bereitzustellen, das eine gute, gleichmäßige Wärmeabgabe über das gesamte Heizelement ermöglicht und darüberhinaus einfach fertigbar und verarbeitbar ist.

Diese Aufgabe wird dadurch gelöst, daß der Werkstoff, aus dem die Ummantelung hergestellt ist, Schamott ist. Dieser Werkstoff ist einerseits gut wärmeleitend und andererseits nimmt er durch Temperaturunterschiede verursachte Spannungen bis zu extremen Temperaturwerten schadlos auf. Dabei ist der Schamott-Werkstoff eine Mischung aus Schamottgranulat, Blähton und Zement. Schamottgranulat ist ein Werkstoff, der im wesentlichen aus gemahlenen Schamottsteinen, die wiederum letztendlich aus Ton hergestellt sind, besteht. Blähton ist ein Werkstoff, der im extremen Maße Spannungen aufnehmen kann. Dieser Werkstoff ist in Kugelform mit unterschiedlichen Durchmessern erhältlich. Der Zement ist ein spezieller Tonerdezement, der ein hydraulisches Bindemittel mit einem hohen Gehalt an Tonerde darstellt. Der Anteil an AL₂O₃ liegt bei ca. 50%. Dieser Zement besteht im wesentlichen aus Calziumaluminnat und eignet sich daher besonders für derartige Anwendungen.

Dadurch, daß die Ummantelung aus einem derartigen Werkstoff hergestellt ist, entfallen die bei der bisherigen Lösung benötigte Vielzahl von Bauteilen, wie Rahmen, Isolierung, Wärmeleitmaterial Aluminiumplatte und Verschlußplatten. Dadurch ist der Herstellvorgang erheblich vereinfacht und es ist darüberhinaus auch die Montage von derart hergestellten Heizelementen leichter. Diese können nämlich an beliebiger Stelle mit Haltevorrichtungen versehen werden, um sie beispielsweise an einer Wand zu befestigen. Dies ist bei den herkömmlichen Heizelementen nicht möglich, da nur der Rahmen eine tragende Struktur aufweist. Der wesentliche Vorteil des erfindungsgemäßen Heizelementes liegt aber darin, daß die Ummantelung aus einem wärmeleitenden, nicht metallischen und Spannungen aufnehmenden Werkstoff hergestellt ist. Sämtliche bisherigen gattunsgsgemäßen Heizelemente sind ausschließlich als sogenannte Niedertemperatur-Heizelemente ausgelegt, die mit einer maximalen Vorlauftemperatur der Heizflüssigkeit von ca. 35°C betrieben werden können. Darüber hinausgehende Temperaturen sind unzulässig, da bei höheren Temperaturen unter anderem die Ummantelung aufgrund der hohen Temperaturen zerstört würde. So sind als herkömmliche Werkstoffe für die Ummantelung neben den zuvor genannten Materialien (DE-OS 41 32 870) Betonwerkstoffe (DE-OS 37 04 422, DE-OS 32 17 905) zum Einsatz gekommen. Dadurch, daß erfindungsgemäß ein Spannungen aufnehmender, nicht metallischer und gleichzeitig wärmeleitender Wirkstoff für die Ummantelung verwendet wird, kann das Heizelement theoretisch bis zu einer Vorlauftemperatur der Heizflüssigkeit von über 100°C betrieben werden, ohne daß sich irgendwelche Schäden an der Ummantelung einstellen. Damit ist das erfindungsgemäße Heizelement in jedem Fall zur Verwendung in herkömmlichen Heizanlagen mit Vorlauftemperaturen der Heizflüssigkeit bis zu ca. 60°C geeignet und kann ohne irgendwelche Änderungen am Heizsystem gegen einen herkömmlichen Stahl- oder Blechheizkörper ausgetauscht werden. Selbstverständlich ist das erfindungsgemäße Heizelement auch zum Betreiben in Niedertemperatur-Heizanlagen geeignet.

In Weiterbildung der Erfindung ist das Mischungsverhältnis von Schamottgranulat, Blähton und Zement drei Raumteile Schamottgranulat, zwei Raumteile Blähton und ein Raumteil Zement. Mit diesem Mischungsverhältnis werden gute Wärmeleitwerte erreicht und die so hergestellte Ummantelung nimmt problemlos die Wärmespannungen bis zu Heizflüssigkeitstemperaturen von 100°C auf. Im übrigen läßt sich dieses Ummantelungsmaterial gut verarbeiten, indem es in den angegebenen Mengenverhältnissen unter Wasserzusatz angemischt wird und dann in eine entsprechend vorbereitete Form, in die die gegebenenfalls entsprechend der Größe der Form gebogene und gewundene Heizleitung eingelegt ist, eingegossen wird. Nach dem Trocknen und Aushärten der Ummantelung, kann diese aus der Form entnommen werden und das nunmehr fertige Heizelement kann direkt verarbeitet bzw.montiert werden.

In Weiterbildung der Erfindung ist die Heizleitung aus einem nicht metallischen oder metallischen Werkstoff hergestellt. Als nicht metallische Werkstoffe kommen insbesondere Kunstoffrohre in Betracht, die beispielsweise für Fußbodenheizungen in vielfältiger Ausführungsform zur Verfügung stehen und problemlos verwendet werden können. Als metallische Werkstoffe für die Heizleitung können insbesondere Kupferrohre und gegebenenfalls auch Stahl- oder V2A-Rohre verwendet werden. Insbesondere Kupferrohre sind für Heizungsbauzwecke in vielfältigen Abmessungen vorrätig und somit problemlos beschaffbar. Diese Rohre können auf einfachen Biegemaschinen entsprechend dem vorgegebenen Verlegemuster für ein Heizelement gebogen werden.

In Weiterbildung der Erfindung ist die Heizleitung mit einem Überzug versehen. Dieser Uberzug ist einerseits als Korrosionsschutz für insbesondere die metallischen Leitungen vorgesehen, so daß in der Ummantelung gegebenfalls befindliche aggressive Stoffe nicht an die entsprechende Heizleitung gelangen können. Weiterhin nimmt der Uberzug zumindest einen Teil der durch die Wärmezufuhr verursachten Ausdehnungen, der insbesondere metallischen Heizleitungen auf. Damit ist in Ergänzung zu der Wärmespannung aufnehmenden Ummantelung eine günstige Werkstoffkombination gegeben. Es ist aber darauf zu achten, daß der Uberzug gut wärmeleitend ist. Paraffin hat sich beispielsweise als geeigneter Überzug erwiesen. Zum Überziehen der Rohre werden diese einfach in einen Behälter mit erhitzten Paraffin eingetaucht.

In Weiterbildung der Erfindung sind mehrere voneinander unabhängige Heizleitung in einer Ummantelung angeordnet. Insbesondere ist vorgesehen. zwei voneinander unabhängige Heizleitungen in einer Ummantelung anzuordnen. Dabei ist die erste Heizleitung an den normalen Heizkreislauf einer Heizanlage beispielsweise eines Hauses angeschlossen, während die zweite Heizleitung an die Warmwasserversorgung angeschlossen ist. Damit kann dieses Heizelement insbesondere alternativ beispielsweise in einer Übergangszeit, wenn die Heizanlage noch außer Betrieb ist, mit Warmwasser aus der Warmwasserversorgung betrieben werden und erst dann, wenn die Heizanlage in Betrieb genommen wird, wird auf deren Heizkreislauf umgeschaltet.

In Weiterbildung der Erfindung ist zusätzlich zu einer oder mehreren Heizleitungen eine elektrische Heizleitung in der Ummantelung angeordnet. Diese elektrische Heizleitung bietet sich insbesondere zu einer vorübergehenden Benutzung an, wenn wiederum der normale Heizkreislauf noch nicht eingeschaltet ist und/oder ein Warmwasserkreislauf nicht zur Verfügung steht.

Verwendet werden kann das erfindungsgemäße Heizelement in der Form, daß das Heizelement - wie zuvor bereits dargestellt - als normaler Heizkörper verwendet wird, der wie ein konventioneller Metall-Heizkörper frei- und/oder wandmontierbar ist. Dabei bietet das erfindungsgemäße Heizelement den Vorteil, daß das Heizelement gegenüber einem Stahl- oder Blechheizkörper eine sehr angenehme Wärme abgibt. So ist ein beispielsweise auf ca. 50°C bis 60°C aufgeheizter Blech- oder Metallheizkörper bei einer Berühung unangenehm heiß, während sich ein erfindungsgemäß hergestelltes Heizelement auch über längere Zeiträume bei derartigen Heiztemperaturen sogar mit angenehmer Wirkung berühren läßt. Weiterhin ist das erfindungsgemäß ausgestaltete Heizelement problemlos, beispielsweise an gewünschte Wohnraumgestaltungen anpaßbar und kann beispielsweise gestrichen, tapeziert oder mit Fliesen belegt werden. Das Heizelement kann wie ein herkömmlicher Heizkörper an einer Wand, beispielsweise in einer Fenster-nische befestigt werden oder aber auch frei im Raum, beispielsweise als Raumteiler aufgestellt werden.

In Weiterbildung der Erfindung wird das Heizelement als Heizkörper verwendet, der in eine Gebäudewand eingelassen und/oder zumindest einen Teil einer Gebäudetrennwand bildet. Hier bietet sich insbesondere der Einsatz in Gebäudetrennwänden an, da bei einem derartigen Einbau beispielsweise mit einem Heizelement zwei nebeneinanderliegende durch eine Wand getrennte Räume beheizbar sind, wobei aber in den Räumen keinerlei störende Heizkörper vorhanden sind. Vielmehr sind die Heizelemente so in die Trennwand integrierbar, daß sie beispielsweise wie die restliche Wand tapeziert, überhaupt nicht erkennbar sind. Diese Verwendung ist bietet sich sowohl bei konventionell gebauten Häusern als auch insbesondere bei Fertighäusern an, bei der die Heizkörper schon bei der Produktion der Hauselemente in der Fabrik in die Trennwände eingesetzt werden können und vor Ort nur noch die Anschlußleitungen an die Heizleitung in dem Heizelement angeschlossen werden müssen. Dabei können dann entsprechend dem berechneten Wärmebedarf verschieden große, nach einem Baukastenprinzip hergestellte Heizelemente verwendet werden. Selbstverständlich ist es auch möglich, die Heizelemente in Außenwände einzusetzen, dabei ist es aber dann erforderlich, daß die Heizelemente bzw. die entsprechende Außenwand zur Außenseite hin abisoliert ist.

In Weiterbildung der Erfindung ist das Heizelement als Bodenheizelement verwendbar. Hierbei ist vorgesehen, ein erfindungsgemäßes Heizelement gezielt vor ein Fenster oder eine Tür in Ergänzung oder anstelle von normalerweise an der Wand angeordneten Heizelementen vorzusehen, wobei der Rest des Fußbodens in herkömmlicher Weise gefertigt ist. Erfindungsgemäß ist aber auch vorgesehen, den gesamten Boden des Hauses bzw. des jeweiligen Raumes mit Heizelementen auszulegen. Dabei können einzelne Heizelemente aus einem Baukastensystem Verwendung finden, die entsprechend der Raumgröße auf dem Boden ausgelegt und miteinander verbunden werden. Selbstverständlich ist es auch möglich, die Heizelemente individuell für eine Raumgröße oder Raumform vorzufertigen und dann entsprechend einzubauen. Insgesamt bietet der Einsatz von erfindungsgemäßen Heizelementen auf dem Boden den Vorteil, daß einerseits ein sehr angenehmes Heizklima in dem Raum geschaffen wird, andererseits die insbesondere Trocknungsphase des Fußbodens gegenüber einem herkömmlich hergestellten Fußbodens mit beispielsweise einer Fußbodenheizung drastisch reduziert ist. Während der Estrich einer herkömmlich Fußbodenheizung langsam im Bereich von Tagen oder Wochen austrocknen muß, und während dieser Zeit nicht betreten werden darf, kann der Fußboden, der mit erfindungsgemäßen Heizelementen ausgelegt ist, sofort weiter verarbeitet werden und beispielsweise mit Fliesen beklebt werden.

In Weiterbildung der Erfindung ist das Heizelement zur Ein- und/oder Untermauerung von Sanitärbauteilen, wie Badewannen, Duschen, Waschtischbänken oder anderen verwendbar. So können auf die verschiedensten Größen von beispielsweise Badewannen und Duschen vorgefertigte Heizelemente bereitgestellt werden, die anstelle einer konventionellen Ein- oder Untermauerung von diesen Sanitärteilen verwendet werden. Damit wird einerseits eine Beheizung des Raumes ermöglicht, andererseits die Dusche oder insbesondere die Wanne angenehm vorgeheizt. Weiterhin kann das Heizelement auch als sogenannte Ummantelung für die Badewanne, Dusche oder sonstige Sanitärbauteil ausgebildet sein, in die diese(s) eingesetzt wird. Hier ergibt sich besonders der Vorteil, daß eine derartig vorgeheizte Wanne, Dusche oder sonstiges Sanitärbauteil mit geringer temperiertem Wasser gefüllt werden kann, was eine Energieersparnis mit sich bringt.

Eine besonders vorteilhafte Verwendung des erfindungsgemäßen Heizelementes, ist des Einsatz als Konstruktionsbauteil eines Kachelofens. Bei dieser Verwendungsmöglichkeit kann auch bei einem nicht durch Holz, Kohle oder Gas beheizten Kachelofen der Effekt der angenehmen Erhitzung des Raumes durch eben den Kachelofen erreicht werden. Dabei ist in Weiterbildung der Erfindung vorgesehen, daß mehrere Heizelemente als Konstruktionsbauteile eines Kachelofens zusammensetzbar sind. Dabei können die Konstruktionsbauteile komplett also einschließlich der Kacheln vorbereitet sein, so daß an der Baustelle der Kachelofen innerhalb kürzester Zeit aufbaubar ist. Dabei brauchen dann die Heizleitungen nur untereinander und mit dem Heizkreislauf gegebenenfalls unter Einschaltung einer zusätzlichen Pumpe verbunden werden. Zudem kann ein Ventil, das gegebenenfalls mit einem Thermostat versehen sein kann, eingebaut werden. Die Konstruktionsmöglichkeiten des Kachelofens sind dabei ausdrücklich in keiner Weise eingeschränkt, daß heißt dieser kann in beliebiger Form und Größe gestaltet sowie mit einer frei bestimmbaren Verkleidung, wie beispielsweise Verputz, Fliesen, Kacheln oder Naturstein versehen sein.

Mit dem erfindungsgemäßen Heizelement läßt sich im übrigen bei einer Vorlauftemperatur von 40°C bis 45°C eine Wärmeabgabe von ca.200 bis 300 Watt/m² Oberfläche erzielen. Dabei ist bei einem beidseitig genutzten Heizelement von einem Quadratmeter Größe ist eine Wärmeabgabe von 400 bis 500 Watt/m² erzielbar, daß heißt, es ist fast eine Verdopplung der Heizleistung gegenüber einem einseitig genutzten Heizelement erreichbar.

Vorteilhafte Weiterbildungen der Erfindung sind der Zeichnungsbeschreibung zu entnehmen, in der in den Figuren dargestellte Ausführungsbeispiele der Erfindung näher beschrieben sind.
Es zeigen:
- Fig. 1a: eine Ansicht eines Heizelementes mit einer darin eingelassenen Heizleitung,
- Fig. 1b: einen Schnitt durch das Heizelement gemäß Fig. 1a,
- Fig. 2: ein Heizelement mit einer gegenüber Fig. 1a anders verlegten Heizleitung und
- Fig. 3: Konstruktionsbauteile eines Kachelofens, die aus einzelnen Heizelementen bestehen.

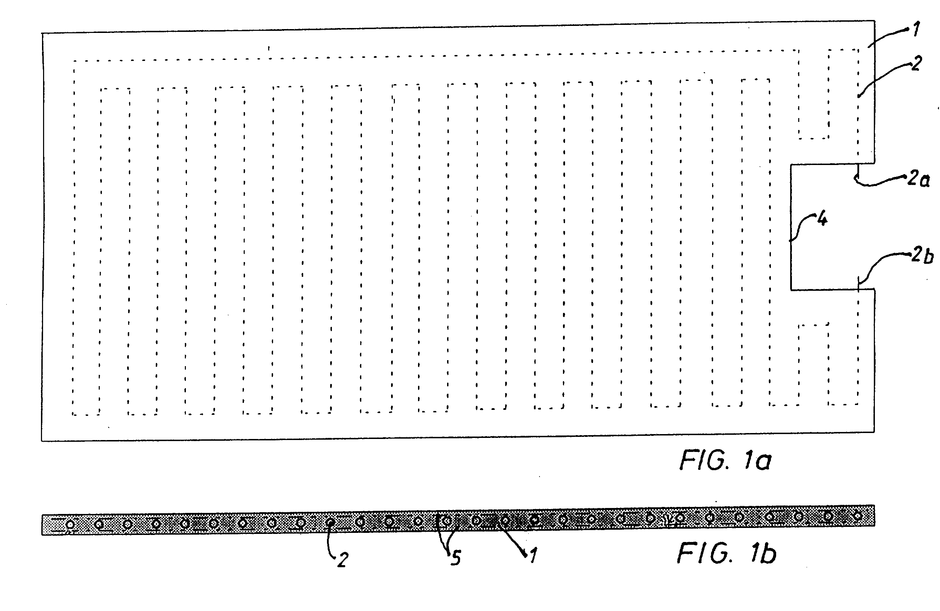

Das Heizelement 1 gemäß Fig. 1a ist in Form eines rechteckigen Heizkörpers ausgebildet, in dessen Seitenwand eine Ausnehmung 4 für Anschlüsse 2a, 2b der Heizleitung 2 eingelassen ist. Die Heizleitung 2 verläuft in dem Heizelement 1 nach dem strichliniert dargestellten Verlegeplan. Dabei wird die Heizleitung 2 so an den Heizkreislauf der Heizunganlage angeschlossen, daß der Anschluß 2a den Vorlauf bildet, durch den das Heizwasser in das Heizelement 1 einströmt, während der Anschluß 2b den Rücklauf bildet, aus dem das Heizwasser wieder zurück in die entsprechende Versorgungsleitung strömt. Die Anschlüsse 2a, 2b können mit handelsüblichen Schraubverbindungen an den Heizkreislauf angeschlossen werden. Im übrigen ist die Ausnehmung 4 nicht zwingend erforderlich, sondem es können die Heizleitung 2a, 2b auch so angeordnet sein, daß diese beispielsweise seitlich aus einem Heizelement 1 herausragen.

Der Schnitt nach Fig. 1b zeigt , daß die Heizleitung 2 etwa in der Mitte des Heizelementes 1 angeordnet ist. Zu beiden Seitenwänden des Heizelementes 1 sind Armierungen 5 vorgesehen, die beispielsweise in Form einer Stahl- oder Gewebematte aus Kunststoff ausgebildet sein kann. Der Werkstoff, in dem die Heizleitung 2 eingebettet ist, ist eine Mischung aus Schamottgranulat, Blähton und Zement, die im Mischungsverhältnis von drei Raumteilen Schamottgranulat, zwei Raumteilen Bläton und einem Raumteil Zement angemischt werden. Diese angerührte Mischung wird in eine Form gegeben, in der zuvor die Heizleitung und die Armierung 5 eingelegt worden sind. Dabei kann anstelle der Armierung 5 oder zusätzlich zu der Armierung auch vorgesehen sein, daß die Heizleitung 2 auf einer handelsüblichen Verlegematte, die beispielsweise zur Verlegung von Fußbodenheizrohren benutzt wird, fixiert wird. Diese Verlegematte stellt dann gegebenfalls die Gewebematte dar. Nach dem Trocknen und Aushärten wird das so hergestellte Heizelement 1 aus der Form entnommen und kann direkt eingebaut werden. Es ist ersichtlich, daß Heizelemente 1 beliebiger Form, die bei Bedarf auch gebogen ausgebildet sein kann, hergestellt werden können.

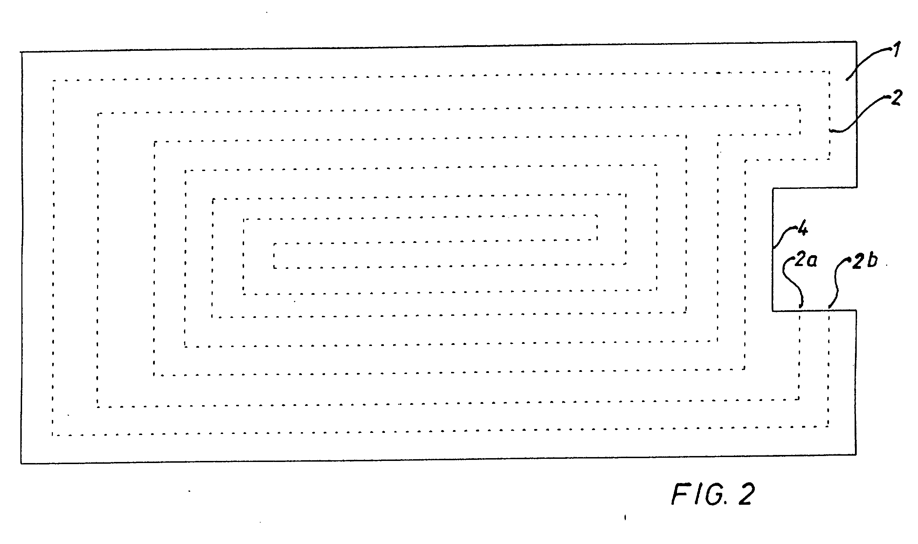

In dem Ausführungsbeispiel nach Fig. 2 ist das Heizelement 1 prinzipell wie das in Fig. 1a ausgebildet, lediglich der Verlegeplan der Heizleitung 2 ist unterschiedlich zu dem Ausführungsbeispiel nach Fig. 1a. Bei dem Verlegeplan nach Fig. 2 ergibt sich durch die gewählte Verlegeordnung eine sehr gleichmäßige Temperaturverteilung über das gesamte Heizelement 1.

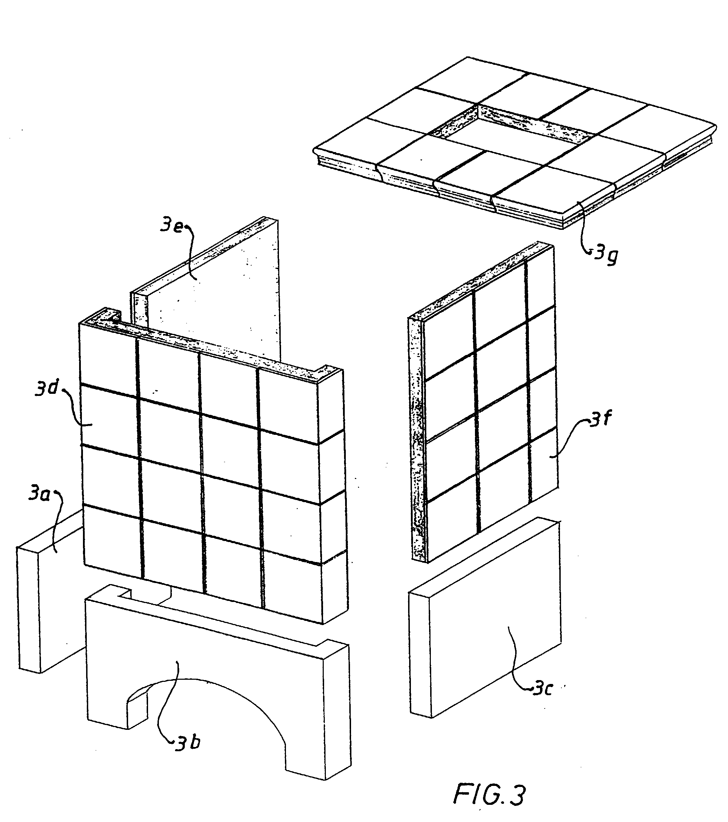

Fig. 3 zeigt ein Ausführungsbeispiel, in dem die Heizelemente 1 als Konstruktionsbauteile 3a, 3b, 3c, 3d, 3e, 3f, 3g eines Kachelofens ausgebildet sind bzw. verwendet werden. Diese Konstruktionsbauteile 3a, 3b, 3c, 3d, 3e, 3f, 3g, die allesamt vorfertigbar sind, lassen sich an der Baustelle zu dem Kachelofen zusammensetzen. Dabei sind die Bauelemente 3d, 3e,3f, 3g mit Keramikfliesen belegt. Die einzelnen Bauelemente stellen also die zuvor beschriebenen Heizelemente 1 dar, in denen jeweils eine Heizleitung 2 eingelassen ist. Die Heizleitungen 2 der einzelnen Bauelemente 3a, 3b, 3c, 3d, 3e, 3f, 3g werden untereinander, gegebenenfalls unter Einschaltung einer Pumpe, verbunden und an das Versorgungsnetz einer Heizanlage angeschlossen. Wird die Heizanlage in Betrieb genommen bzw. ein in die Versorgungsleitung gegebenenfalls über ein Thermostat gesteuertes Ventil geöffnet, strömt das Heizwasser durch die Heizleitungen 2 der einzelnen Konstruktionsbauteile 3a, 3b, 3c, 3d, 3e, 3f, 3g und erwärmt diese, die wiederum die Wärme an die Umgebung, d.h. in den Raum, in dem der Kachelofen aufgestellt ist, abgeben.

## Patentansprüche

1. Heizelement mit einer eine von einer Heizflüssigkeit durchströmten Heizleitung aufnehmenden Ummantelung, die aus einem leitenden, nicht metallischen und Spannungen aufnehmenden Werkstoff hergestellt ist, in den die Heizleitung ganzflächig einbettbar ist,
**dadurch gekennzeichnet,** daß der Werkstoff eine Mischung aus Schamottgranulat, Blähton und Zement ist, daß das Heizelement unabhängig vom Montageort derart herstellbar ist, daß die Heizleitung (2) in eine Form eingelegt wird, daß das Ummantelungsmaterial angemischt und in die vorbereitete Form eingegossen wird und nach dem Trocknen und Aushärten der Ummantelung (1) das fertige Heizelement aus der Form entnommen wird, und daß das Heizelement plattenförmig ausgebildet ist.

2. Heizelement nach Anspruch 1,
**dadurch gekennzeichnet,** daß das Mischungsverhältnis des Werkstoffes drei Raumteile Schamottgranulat, zwei Raumteile Blähton und ein Raumteil Zement ist.

3. Heizelement nach einem der vorherigen Ansprüche,
**dadurch gekennzeichnet,** daß die Heizleitung (2) aus einem nicht metallischen oder metallischen Werkstoff hergestellt ist.

4. Heizelement nach einem der vorherigen Ansprüche,
**dadurch gekennzeichnet,** daß die Heizleitung (2) mit einem Überzug versehen ist.

5. Heizelement nach einem der vorherigen Ansprüche,
**dadurch gekennzeichnet**, daß mehrere voneinander unabhängige Heizleitungen (2) in der Ummantelung (1) angeordnet sind.

6. Heizelement nach einem der vorherigen Ansprüche,
**dadurch gekennzeichnet,** daß zusätzlich zu einer oder mehreren Heizleitungen (2) eine elektrische Heizleitung in der Ummantelung (1) angeordnet ist.

7. Verwendung eines Heizelementes nach einem der vorherigen Ansprüche,
**dadurch gekennzeichnet,** daß das Heizelement als Heizkörper verwendet wird, der frei- oder wandmontierbar ist.

8. Verwendung eines Heizelementes nach einem der vorherigen Ansprüche,
**dadurch gekennzeichnet,** daß das Heizelement als Heizkörper verwendet wird, der in einer Gebäudewand eingelassen ist und/oder zumindest einen Teil einer Gebäudetrennwand bildet.

9. Verwendung eines Heizelementes nach einem der vorherigen Ansprüche,
**dadurch gekennzeichnet,** daß das Heizelement als Bodenheizelement verwendet wird.

10. Verwendung eines Heizelementes nach einem der vorherigen Ansprüche,
**dadurch gekennzeichnet,** daß das Heizelement zur Untermauerung von Sanitärbauteilen, wie Badewannen, Duschen, Waschtischbänken verwendet wird.

11. Verwendung eines Heizelementes nach einem der vorherigen Ansprüche,
**dadurch gekennzeichnet**, daß das Heizelement als Konstruktionsbauteil (3a, 3b, 3c, 3d, 3e, 3f, 3g) verwendet wird.

12. Verwendung eines Heizelementes nach Anspruch 11,
**dadurch gekennzeichnet,** daß die Konstruktionsbauteile (3a, 3b, 3c, 3d, 3e, 3f, 3g) zu einem Kachelofen (4) zusammensetzbar sind.

## Claims

1. Heating element with a coating covering a heating pipe filled with heating fluid, consisting of a conductive, non-metallic and tension absorbing material, in which the heating pipe can completely fit in,
characterised in that the material is a mixture of fireclay granulate, expanded clay and cement; the heating element can be installed independently from the assembly yard; the heating pipe (2) can be laid into a mould; the material of the coating can be mixed and poured into the prepared mould and after drying of the coating (1), the finished heating element can be taken out of the mould; the heating element is a panel radiator.

2. Heating element according to claim 1,
characterised in that the mixing proportion of the material ist three volumes of fireclay granulate, two volumes of expanded clay and one volume of cement.

3. Heating element according to one of the preceding claims,
characterised in that the heating pipe (2) is made of a non-metallic or metallic material.

4. Heating element according to one of the preceding claims,
characterised in that the heating pipe (2) is furnished with a coating.

5. Heating element according to one of the preceding claims,
characterised in that several heating pipes (2), which are independent from one another, are arranged in the coating (1).

6. Heating element according to one of the preceding claims,
characterised in that in addition to one or several heating pipes (2) an electric heating pipe is added into the coating.

7. The use of a heating element according to one of the preceding claims,
characterised in that the heating element will be used as a radiator which can be unattached or fixed to a wall.

8. The use of a heating element according to one of the preceding claims,
characterised in that the heating element will be used as a radiator which is let into a wall and/or is at least part of a building wall.

9. The use of a heating element according to one of the preceding claims,
characterised in that the heating element will be used as floor heating element.

10. The use of a heating element according to one of the preceding claims,
characterised in that the heating element will lay a base for sanitary constructions such as bathtubs, showers and sinks.

11. The use of a heating element according to one of the preceding claims,
characterised in that the heating element will be used as construction part (3a, 3b, 3c, 3d, 3e, 3f, 3g).

12. The use of a heating element according to claim 11,
characteristised in that the construction parts (3a, 3b, 3c, 3d, 3e, 3f, 3g) can be fit to a tiled stove.

## Revendications

1. Elément chauffant avec un enrobage recevant un conducteur chauffant rempli par un fluide caloporteur, qui est fait d'un matériau conducteur, non-métallique et acceptant de la tension, dans lequel le conducteur chauffant peut être complètement enrobé;
caractérisé en ce que le matériau est une composition de granulé de chamotte, d'argile expansée et de ciment; l'élément chauffant peut être construit d'une manière indépendante du lieu d'installation de sorte que le conducteur chauffant (2) est mis dans une forme et le matériau préparé d'enrobage est versé dans cette forme et ainsi, après le séchage de l'enrobage (1), l'élément chauffant peut être pris de la forme; l'élément chauffant ainsi obtenu est un radiateur panneau.

2. Elément chauffant selon revendication 1,
caractérisé en ce que le dosage du mélange du matériau est trois volumes granulé de chamotte, deux volumes d'argile expansée et un volume de ciment.

3. Elément chauffant selon une des revendications précédentes,
caractérisé en ce que le conducteur chauffant (2) est composé d'un matériau non-métallique ou métallique.

4. Elément chauffant selon une des revendications précédentes,
caractérisé en ce que le conducteur chauffant (2) est muni d'une chape.

5. Elément chauffant selon une des revendications précédentes,
caractérisé en ce que plusieurs conducteurs chauffants (2), indépendants l'un de l'autre, sont placés dans l'enrobage.

6. Elément chauffant selon une des revendications précédentes,
caractérisé en ce que'en plus d'un ou plusieurs conducteurs chauffants, un autre conducteur chauffant électrique est placé dans l'enrobage.

7. Utilisation d'un élément chauffant selon une des revendications précédentes,
caractérisé en ce que l'élément chauffant est utilisé comme corps de chauffe, montage non-fixe ou accroché au mur.

8. Utilisation d'un élément chauffant selon une des revendications précédentes,
caractérisé en ce que l'élément chauffant est utilisé comme corps de chauffe, qui a été descendu dans un mur et/ ou constitue au moins une partie d'un mur de bâtiment.

9. Utilisation d'un élément chauffant selon une des revendications précédentes,
caractérisé en ce que l'élément chauffant sera utilisé comme élément chauffant par le fond.

10. Utilisation d'un élément chauffant selon une des revendications précédentes,
caractérisé en ce que l'élément chauffant sera utilisé comme mur d'échiffre des appareils sanitaires comme baignoires, douches et lavabos.

11. Utilisation d'un élément chauffant selon une des spécifications précédentes,
caractérisé en ce que l'élément chauffant sera utilisé comme élément de construction (3a, 3b, 3c, 3d, 3e, 3f, 3g).

12. Utilisation d'un élément chauffant selon revendication 11,
caractérisé en ce que les éléments de construction (3a, 3b, 3c, 3d, 3e, 3f, 3g) peuvent être monter en poêle en faience.
